Europäisches Patentamt

European Patent Office

Office européen des brevets

(19)

(11) Numéro de publication : **0 017 598**
**B1**

(12) FASCICULE DE BREVET EUROPÉEN

(45) Date de publication du fascicule du brevet :
11.05.83

(51) Int. Cl.³ : **D 21 H   3/48**

(21) Numéro de dépôt : **80400475.2**

(22) Date de dépôt : **09.04.80**

(54) **Procédé de traitement de papiers et cartons et produits obtenus.**

(30) Priorité : **10.04.79 FR 7909050**

(43) Date de publication de la demande :
**15.10.80 Bulletin 80/21**

(45) Mention de la délivrance du brevet :
**11.05.83 Bulletin 83/19**

(84) Etats contractants désignés :
**AT DE FR GB IT NL SE**

(56) Documents cités :
**FR A 2 303 655**
**GB A 829 918**
**US A 3 015 581**
**US A 3 519 478**

(73) Titulaire : **LA CELLULOSE DU PIN**
**7, rue Eugène-Flachat**
**F-75849 PARIS CEDEX (FR)**

(72) Inventeur : **Daudé, Gérard**
**Résidence du Grand Louis Appartement 18 Bâtiment**
**I**
**F-33320 Eysines (FR)**
Inventeur : **Lasnier, Jean-Michel**
**Résidence "Le Brandier" Appartement 643**
**F-33405 Gradignan (FR)**
Inventeur : **Pijselman, Joel**
**22, rue André Gide**
**F-33400 Talence (FR)**

(74) Mandataire : **Eudes, Marcel et al**
**Saint-Gobain Recherche 39 Quai Lucien Lefranc**
**F-93304 Aubervilliers Cedex (FR)**

Jouve, 18, rue St-Denis, 75001 Paris, France

# 0 017 598

## Procédé de traitement de papiers et cartons et produits obtenus

La présente invention est relative à un nouveau procédé de traitement de papiers et cartons à base de fibres cellulosiques. Elle concerne plus particulièrement le traitement des papiers et cartons par imprégnation par des émulsions de polyuréthanes bloqués suivie d'un traitement thermique apte à débloquer ces polyuréthanes et à assurer leur réticulation.

Les traitements connus permettant d'améliorer les propriétés à l'état sec et humide de papiers et cartons consistent généralement à les imprégner par des résines telles que l'urée formol, la mélamine formol, des prépolymères de polyuréthane, réticulables sous l'action ultérieure de la chaleur.

En particulier, le brevet US 3 519 478 décrit un traitement de ce type par imprégnation des papiers et cartons par des émulsions de polyuréthanes bloqués, suivie d'un traitement thermique assurant le déblocage des fonctions réactives du prépolymère, qui réagissent alors soit sur les fibres cellulosiques, soit sur l'eau ou encore entre elles pour former des structures dimères ou trimères.

Ce traitement montre plusieurs inconvénients. D'une part, il nécessite des durées de déblocage importantes, généralement de l'ordre de 20 minutes à 30 secondes pour des températures allant de 65 °C à 205 °C. D'autre part, il utilise des agents bloquants labiles tels les phénols, le résorcinol, le catéchol, dont l'emploi est strictement réglementé dans l'emballage alimentaire.

On connaît encore d'après le brevet US 3 015 581 un procédé de séchage rapide d'une couche de revêtement en argile pour des papiers ou cartons. Dans ce cas, le revêtement constitue un véritable bouclier thermique et le séchage peut s'effectuer à très haute température, de l'ordre de 200 °F à 5 000 °F et de préférence de 3 000 °F à 5 000 °F durant un temps très bref, de l'ordre de quelques secondes. Ce brevet n'aborde pas le problème du traitement des papiers ou cartons par des émulsions contenant un polyuréthane bloqué et notamment le traitement thermique provoquant le déblocage des fonctions isocyanates bloquées.

Dans le domaine du traitement des cuirs par des émulsions de polyuréthanes bloqués, on connaît l'utilisation de catalyseurs de déblocage qui facilitent le traitement thermique en réduisant, la température de déblocage ainsi que sa durée : le déblocage s'effectuant entre 80 °C et 200 °C durant une heure. Ces catalyseurs de déblocage sont des sels d'amines tertiaires introduits en proportions appropriées dans les émulsions.

Sous un des aspects de l'invention, on traite les papiers ou cartons à base de fibres cellulosiques par un procédé comprenant les opérations suivantes :

— on imprègne les papiers ou cartons par des émulsions aqueuses contenant au moins un prépolymère de polyuréthane bloqué, au moins un catalyseur de déblocage ;

— on leur fait subir un traitement thermique très bref, à température élevée, de façon à libérer les fonctions isocyanates masquées.

Ce traitement thermique s'effectue en une ou plusieurs étapes d'une durée totale de l'ordre de quelques secondes seulement et moins, 0,5 seconde à 6 secondes et à une température de peau du papier ou carton pouvant varier entre 200 °C et 350 °C et avantageusement de 300 °C à 350 °C.

Sous un des aspects de l'invention, on effectue le déblocage des polyuréthanes bloqués à une température élevée et rapidement, de sorte que seule la couche superficielle des papiers et cartons imprégnés atteigne une température élevée provoquant ledit déblocage, alors que les couches internes n'ont pas le temps d'atteindre ou de dépasser la température critique, c'est-à-dire la température de détérioration des papiers ou cartons.

Sous un des aspects de l'invention, l'opération de déblocage s'effectue par un traitement thermique utilisant une combinaison limite des paramètres température et temps, voisine de celle entraînant la détérioration des papiers ou cartons.

La brièveté du traitement thermique selon l'invention fait en sorte que ce traitement est réalisable industriellement et ce en continu, directement après la fabrication des papiers et cartons.

Etant donné les vitesses de déplacement élevées des bandes de papiers ou cartons en bout de ligne de fabrication — des vitesses de 600 mètres par minute et même supérieures à 1 000 mètres par minute sont courantes — la longueur de ligne nécessaire pour effectuer le traitement thermique en continu est également importante. Par exemple pour un papier se déplaçant à la vitesse de 600 mètres par minute, un traitement thermique selon l'invention en deux étapes d'une durée chacune de 3 secondes nécessite une longueur de traitement de 60 mètres alors qu'un traitement d'une durée de 30 secondes nécessiterait une longueur de traitement de 300 mètres.

Par sa brièveté, le traitement permet en outre un gain important d'énergie. Il s'applique avantageusement à tous les types de papiers ou cartons.

Ce traitement améliore de façon importante notamment les propriétés de résistance à la compression sur chant CCT et de résistance à la compression à plat CMT du papier cannelé.

Par exemple, ces propriétés peuvent être améliorées de 15 à 30 % environ.

En outre, soumis à des conditions rigoureuses d'humidité, un papier ou carton traité suivant l'invention conserve ses propriétés mécaniques alors que dans les mêmes conditions un papier non traité perd ces propriétés.

La préparation d'émulsions de prépolymères de polyuréthanes bloqués est réalisée en veillant à ce que les polyuréthanes présentent des fonctions isocyanates bloquées très thermolabiles, une chaîne

2

polymérique stable au traitement thermique et fasse appel à des matières premières et agents bloquants compatibles avec une utilisation ultérieure dans l'emballage alimentaire.

Pour ce faire, on utilise un prépolymère de polyuréthane qui, sous forme non bloquée, présente un excès de groupes isocyanates NCO par rapport aux groupes hydroxyles OH. On obtient les meilleurs résultats lorsque le rapport NCO/OH dans le prépolymère est compris entre 1,5 et 3,5 et de préférence voisin de 2,5.

Comme composant du polyuréthane, on utilise des polyisocyanates aromatiques ou aliphatiques, les premiers donnant plus de rigidité au prépolymère de polyuréthane.

On utilise de préférence le toluène-2,4-diisocyanate (TDI), le 4,4'-diphénylméthanediisocyanate pur ou polymérisé (polyphénylpolyisocyanate), des polyisocyanates aliphatiques tels le 1,6-hexaméthylène diisocyanate (HMDI), l'isophorone diisocyanate ou isocyanatométhyl-3-triméthyl-3,5,5-cyclohexylisocya-nate (IPDI), le triméthyl-2,2,4-hexaméthylène-diisocyanate (TMDI), le triméthyl-2,4,4-hexaméthylènediiso-cyanate (TMDI).

Comme composé contenant au moins deux groupements à hydrogène mobile susceptibles de réagir sur un groupement isocyanate, on utilise de préférence des polyéthers-polyols, des polyesters-polyols, des polyamines ou des homopolymères et copolymères du butadiène à terminaison hydroxyle ou carboxyle.

Avantageusement, on utilise des polyéthers polyols moins coûteux et moins sensibles à l'hydrolyse que les polyesters-polyols. De préférence, on utilise du polypropylèneglycol de masse moléculaire allant de 200 à 2 000, des copolymères d'oxyde d'éthylène et d'oxyde de propylène, de masse moléculaire allant de 1 000 à 5 000, de fonctionalité 2 ou 3, des polyéthylèneglycols, des polyéthers-polyols halogénés, de masse moléculaire d'environ 500, de fonctionalité comprise entre 2 et 3, permettant la fabrication de polyuréthanes autoextingibles.

Des agents d'allongement de chaînes tels des polyols plurifonctionnels de masse moléculaire faible peuvent être rajoutés de manière à rigidifier le prépolymère de polyuréthane. On utilise de préférence le triméthylolpropane (TMP), le triéthanolamine (TEA), le glycérol, le pentaérythritol, provoquant une réticulation du polyuréthane. On utilise également le butanediol-1,4, le néopentylglycol (NPG) ou encore un produit de condensation de quatre molécules d'oxyde de propylène sur l'éthylènediamine commercialisé sous l'appellation QUADROL par la Société PUK.

Comme agents bloquants pour protéger ou masquer les fonctions isocyanates libres du prépolymère de polyuréthane dans l'émulsion, on peut utiliser le phénol, l'ortho, le méta ou le para crésols et leurs mélanges, le xylénol, le résorcinol, l'hydroquinone, le catéchol, le guaiacol, les naphtols, les alkylphénols tels les butylphénols, l'octylphénol, le nonylphénol, le 2,4-diisobutylphénol et ses dérivés, le 4-hydroxybi-phényle, le 6-hydroxytétraline, les bisphénols tels que l'isopropylidène -4,4'-bisphénol, des lactames tels que α-pyrrolidone, l'ε-caprolactame, des oximes tels que le méthyléthylcétoxime, l'acétoxime, la cyclohexanoneoxime, l'hydroxylamine, l'acide cyanhydrique, le bisulfite de sodium, le tertiobutanol, le malonate de diétyle, l'acétoacétate d'éthyle, le cyanoacétate d'éthyle, le 2,4-pentanedione, l'acétylacé-tone, la diphénylamine, la monométhylaniline, les aryl-mercaptans, les alkyl-mercaptans, le 1-phényl-3-méthyl-5-pyrazolone, etc.

On utilise avantageusement des oximes tels l'acétoxime, la méthyléthylcétoxime, et leurs homologues supérieurs, des lactames tels l'ε-capro lactame, le lauryllactame, l'α-pyrrolidone, des composés à groupements méthylène actif tels le malonate de diéthyle, l'acétoacétate d'éthyle, l'acétylacétone. On peut encore utiliser des alcools tels l'alcool furfurylique, l'alcool tétrahydrofurfurylique, l'alcool benzylique, les alcools alkylaromatiques. Ces agents sont des produits courants compatibles avec l'emballage alimentaire. Ils permettent le déblocage à basse température.

Comme catalyseurs de déblocage des fonctions isocyanates masquées, on peut utiliser des sels d'acides organiques mono ou polycarboxyliques et d'amines tertiaires ou de polyamines qui ont au moins un azote tertiaire, des produits de réaction d'amines avec des aldéhydes ou cétones tels l'hexaméthylène tétramine ou des bases de Schiff. Ces catalyseurs sont utilisés à raison de 0,1 à 5 % dans l'émulsion et de préférence de 1 à 3 %.

Dans ce groupe de catalyseurs de déblocage, on choisit de préférence l'acétate de triéthylamine, l'acétate de N-N-diméthylcyclohexylamine, des polyacétates de polyamines. Ce sont des produits peu coûteux, de synthèse facile, compatibles avec l'emballage alimentaire.

Comme agent de déblocage, on peut encore utiliser des sels organométalliques et des complexes métalliques à raison de 0,1 % à 1 % environ du poids total du polyuréthane bloqué. Parmi ceux-ci, les dérivés organostanniques tels les dicarboxylates de dialkylétain, les dihalogénures de dioctylétain, les acétylacétonates métalliques, tel celui du zinc.

Les papiers et cartons peuvent être imprégnés par diverses méthodes connues de l'homme de métier, par exemple en sizepress, par trempage en plein bain, par enduction type hélio, à la lame d'air, à la lame lissante..

Après imprégnation, les papiers et cartons passent d'abord un court moment, de l'ordre de 6 à 10 secondes dans une sécherie à une température de l'ordre de 50 °C à 130 °C et de préférence entre 80 et 120 °C. Aucun déblocage n'est observé. Ils subissent ensuite le traitement thermique proprement dit qui porte leur peau à une température comprise entre 200 °C et 350 °C et de préférence entre 300 °C et 350 °C durant un temps de cinq dixièmes de seconde à 6 secondes et de préférence inférieur à

3

3 secondes. Ce traitement thermique bref a pour effet de débloquer le prépolymère, précisément de libérer les fonctions isocyanates qui réagissent notamment sur le matelas fibreux.

Le traitement thermique peut aussi s'effectuer en plusieurs étapes brèves de l'ordre de quelques dixièmes de seconde à une seconde aux températures précédemment indiquées.

Le traitement thermique peut se faire par passage du papier ou du carton à faible distance, de l'ordre de 5 à 7 centimètres, d'une rampe infra-rouge ou encore dans une enceinte calorifugée chauffée par un canon à air chaud.

La température et la durée du traitement thermique sont déterminées, de sorte que le papier ou carton ne soit pas endommagé. Par exemple, la température de la peau du papier ou carton est portée à 350 °C pendant quelques dixièmes de seconde. Cette température de peau peut être mesurée par des crayons thermochromes.

D'autres caractéristiques et avantages de l'invention apparaîtront dans la description de quelques exemples de réalisation de l'invention.

## Exemple 1

On prépare un prépolymère de polyuréthane par addition en deux étapes de 217,7 g (1,25 mole) de toluène 2,4-diisocyanate sur 224 g (0,5 mole) de polypropylèneglycol (masse moléculaire M = 448 et teneur en radicaux hydroxyles libres $I_{OH}$ = 250).

Après agitation pendant 5 heures à 40 °C, le spectre infra-rouge montre la disparition totale des fonctions hydroxyles du polyol.

On bloque les fonctions isocyanates libres par addition de 130,5 g (1,5 mole) de méthyléthylcétoxime à température ambiante : la réaction s'effectue très rapidement ; après une demi-heure de réaction, le spectre infra-rouge montre la disparition de la bande isocyanate ($\nu$NCO = 2 270 cm$^{-1}$).

On forme une émulsion aqueuse à l'aide d'un mixer de laboratoire. Dans ce but, on y introduit le polyuréthane bloqué, porté à 60 °C environ, préalablement additionné de 5 à 10 % de solvants tels l'acétone, la méthyléthylcétone, la diglyme, l'acétate d'éthyle, le butanol secondaire, sans que cela soit obligatoire, et contenant 2,5 % d'un tensio-actif non ionique, par exemple un copolymère oxyde d'éthylène-oxyde de propylène de masse moléculaire M = 3 800, de teneur en radicaux hydroxyles libres OH = 29, l'oxyde d'éthylène représentant 13 % des monomères, et 0,5 % de lauryléther sulfate de sodium agissant comme tensio-actif anionique.

La phase aqueuse est préparée à partir de 700 g d'eau distillée, 7,7 g de carboxyméthylcellulose soit 1,1 % de cette phase aqueuse, 17,5 g de copolymère oxyde d'éthylène-oxyde de propylène soit 2,5 % de ladite phase aqueuse et 3,5 g de lauryléther sulfate de sodium soit 0,5 % de la phase aqueuse. Elle est ensuite additionnée goutte à goutte à la phase huileuse où elle se disperse. La viscosité de l'émulsion eau dans huile augmente progressivement, jusqu'à l'inversion de l'émulsion en une émulsion du type huile dans eau où l'on observe une diminution de la viscosité.

L'émulsion ainsi préparée est stable pour une période supérieure à un an. Les propriétés sont les suivantes : pH 7-8, extrait sec 45 %, taille moyenne des particules : 1 à 2 μm, viscosité mesurée par un viscosimètre Brookfield RVT : 2 100 centipoises à 100 t/mn (2,1 Pa.s).

Dans cette émulsion, on introduit 7,45 g d'acétate de N-N-diméthylcyclohexylamine comme catalyseur de déblocage, soit 1,5 % de l'émulsion. On la dilue ensuite jusqu'à ce que l'extrait sec représente 10 % en poids. On en imprègne en size-press un papier cannelure à 120 g/m$^2$ élaboré à partir de vieux papiers.

La quantité de prépolymère de polyuréthane introduit dans le papier, déterminée par un dosage de l'azote apporté par le polyuréthane selon la méthode de KJELDALH, est de 1,96 %.

Le papier cannelure entraîné à une vitesse de 50 mètres par minute environ passe ensuite dans une sécherie à 80-120 °C pendant 6 secondes environ. Aucun déblocage n'est observé. Le papier passe ensuite entre deux rampes infra-rouge où sa température de peau est portée à 300 °C environ, pendant 2 fois 3 secondes. Ce traitement thermique est suffisant pour provoquer le déblocage des fonctions isocyanates et leur réticulation sur le matelas fibreux.

Après conditionnement 72 heures à 20 °C et 65 % d'humidité relative, les propriétés mécaniques du papier traité selon l'invention (D) sont comparées à celles d'un papier témoin non traité (A), d'un papier imprégné par l'émulsion mais non traité thermiquement (B), d'un papier imprégné par l'émulsion et traité thermiquement par passage dans une étuve à 140 °C pendant 20 minutes (C), ce qui a pour effet de débloquer totalement le prépolymère de polyuréthane.

Les résultats d'essais sont mentionnés dans le tableau 1 (en annexe).

Ce tableau montre que :

— l'imprégnation seule du papier cannelure séché mais non soumis au traitement thermique, donc sans déblocage du prépolymère (B), n'amène aucune amélioration des propriétés du papier témoin (A) ;

— le traitement thermique du papier imprégné (D) par un double passage de 3 secondes à 300 °C est équivalent à celui effectué pendant 20 minutes à 140 °C dans une étuve pour lequel les données de la littérature indiquent que le déblocage est total ;

— un dépôt de 1,96 % de polyuréthane accroît la résistance à la compression sur chant CCT du papier cannelé de 41 % ;

— la résistance à la compression à plat CMT du papier cannelé s'accroît quant à elle de 35 %.

La longueur de rupture par traction, c'est-à-dire la longueur limite calculée, au-delà de laquelle une bande de papier d'une largeur quelconque, mais uniforme, supposée suspendue par l'une de ses extrémités, se rompt sous l'effet de son propre poids, cette longueur s'accroît en moyenne de 27 %.

L'indice d'éclatement sec, c'est-à-dire le quotient de la résistance à l'éclatement par le grammage du papier conditionné, s'accroît de 43 % après traitement thermique.

Ces résultats font ressortir l'intérêt du procédé notamment pour les papiers cannelures 100 % vieux papiers.

Exemple 2

On opère comme dans l'exemple n° 1, mais en utilisant de l'acétoxime comme agent bloquant. L'acétoxime a une faible masse moléculaire et on peut l'utiliser en faible quantité.

L'imprégnation réalisée en size-press est faite sur du papier couverture (150 g/m$^2$) obtenu par cuisson au procédé sulfate par l'émulsion de polyuréthane bloqué diluée à 7 %. Après élimination de l'eau apportée par l'imprégnation, le papier passe entre deux rampes infra-rouge pendant 3 secondes où sa température de peau atteint 300 °C environ.

Les propriétés mécaniques du papier sont résumées dans le tableau 2 (en annexe).

Les remarques formulées pour l'exemple 1 sont valables pour l'exemple 2.

La seule imprégnation du papier couverture obtenu par cuisson au procédé sulfate, sans déblocage (B) n'amène pas de modifications des propriétés du papier témoin (A) : seul le Cobb, c'est-à-dire la quantité d'eau absorbée due au remouillage du support, s'accroît.

Le traitement thermique du papier imprégné (D) par un double passage de 3 secondes à 300 °C est équivalent à celui effectué pendant 20 minutes à 130 °C dans une étuve pour lequel les données de la littérature indiquent que le déblocage est total (papier C).

On note également que :

a) la résistance à la compression sur chant CCT s'accroît de 11,1 % pour un dépôt de 2 % de polyuréthane ;

b) l'indice d'éclatement sec s'accroît de 25 % pour un dépôt de 2 % de polyuréthane ;

c) la longueur de rupture sens marche s'accroît de 15 à 22 %, alors que la longueur de rupture sens travers s'accroît de 11 %.

Pour ce papier qui constitue un support noble, l'efficacité du traitement est légèrement moins sensible que pour du papier cannelure à 100 % vieux papiers, mais reste tout à fait comparable à celle du traitement durant 20 minutes à 130 °C.

Exemple 3

L'émulsion de polyuréthane bloqué est préparée selon le mode opératoire décrit dans l'exemple n° 1.

Les essais ont été réalisés sur machine semi-industrielle, par imprégnation en size-press de papier cannelure 118 g/m$^2$ (composition fibreuse : 60 % pâte kraft + 40 % vieux papiers) au moyen de l'émulsion diluée à 7 %. La quantité de polyuréthane déposée est de 1,3 %.

Après passage dans une sécherie à 100-110 °C pendant 6 secondes environ qui n'entraîne pas de déblocage du polyuréthane, le papier cannelure subit un traitement thermique à 250 °C pendant 3 secondes ou 2 fois 3 secondes, par passage entre deux rampes infra-rouge, situées à environ 7 centimètres de la surface du papier.

Les résultats des essais physiques permettant de comparer ce traitement avec ceux connus sont mentionnés dans le tableau 3 (en annexe).

Plusieurs remarques peuvent être faites :

— les propriétés mécaniques du papier témoin (A') porté 3 secondes à 250 °C sont voisines de celles du papier témoin (A). Le gain des caractéristiques du papier imprégné débloqué provient vraisemblablement de la réticulation du polymère sur les fibres et peu d'une auto-condensation des fibres

— par rapport au papier non traité, la résistance à la compression sur chant CCT du papier traité selon l'invention s'accroît de 25 %, sa résistance à la compression à plat CMT s'accroît de 23 %, et son indice d'éclatement sec s'accroît de 30 %.

Exemple 4

Dans cet exemple, on enduit, au rouleau enducteur, une face de papier couverture (100 % vieux papiers) par l'émulsion décrite dans l'exemple n° 1 diluée à 15 % et contenant 2 % en poids par rapport à l'extrait sec de catalyseur de déblocage.

Le support, après passage dans une sécherie, est chauffé par un canon à air chaud type Leister permettant d'atteindre une température de peau de 280 °C environ pendant 3 secondes.

Les propriétés finales du papier comparées à celles de papiers traités différemment sont mentionnées dans le tableau 4 (en annexe).

On remarque qu'un taux de 2 % de polyuréthane accroît les caractéristiques du papier de façon très significative et que notamment le COBB est abaissé.

## Exemple 5

Dans cet exemple, on enduit, au rouleau enducteur, une face de papier couverture (100 % vieux papiers) par l'émulsion décrite dans l'exemple n° 1, diluée à 20 % et contenant 2 % de catalyseurs de déblocage.

Le support, après passage dans une sécherie, est chauffé par un canon à air chaud type Leister permettant d'atteindre une température de peau de 280 °C environ pendant 3 secondes.

Les propriétés finales du papier comparées à celle de papiers traités différemment sont mentionnées dans le tableau 5 (en annexe).

Ce tableau appelle les remarques suivantes :

— les propriétés de résistance à la compression sur chant de papier cannelé CCT et de résistance à la compression sur chant d'une éprouvette de papier en forme d'anneau RCT sont très améliorées. Un taux d'imprégnation de 3,7 % améliore le CCT de 61 % et le RCT de 28 %.

## Exemple 6

On enduit en size-press, sur machine semi-industrielle, du papier cannelure (100 % vieux papiers) (110 g/m$^2$) par l'émulsion de polyuréthane bloqué décrite dans l'exemple 1, diluée à 10 % et contenant 3 %, en poids par rapport à l'extrait sec, d'acétate de N-N-diméthylcyclohexylamine comme catalyseur de déblocage.

Le papier imprégné passe dans une sécherie portée à 120 °C, durant 6 secondes, puis dans une boîte calorifugée chauffée par un canon à air chaud. La température interne de la boîte est voisine de 450 °C. Pour un séjour de 0,5 seconde dans la boîte, le papier voit sa température de peau atteindre environ 300 °C : le déblocage du polyuréthane bloqué s'opère car on décèle immédiatement l'odeur d'isocyanate.

Les propriétés finales du papier sont mentionnées dans le tableau 6 (colonne C) (en annexe). Un traitement du même type effectué deux fois permet d'améliorer les propriétés caractéristiques du support (colonne D).

Un déblocage à 300 °C pendant un temps très bref est suffisant pour améliorer de façon importante les propriétés de résistance à la compression (CMT et CCT), la longueur de rupture, l'allongement et l'indice d'éclatement sec du papier cannelure.

## Exemple 7

On prépare un prépolymère de polyuréthane par addition en deux étapes de 217,7 g (1,25 mole) de toluène-2,4-diisocyanate (TDI) sur 526 g (0,5 mole) de polyester, par exemple celui commercialisé sous l'appellation OXYESTER T 1 136 de VEBACHEMIE, dont la masse moléculaire est de 1 052 et la teneur en radicaux hydroxyles libres $I_{OH}$ de 107.

On agite 5 heures à 40 °C, puis on bloque les fonctions isocyanates libres par addition de 109,5 g (1,5 mole) d'acétoxime à la température de 60 °C. Après une demi-heure de réaction, le spectre infra-rouge montre la disparition de la bande isocyanate.

On effectue la préparation de l'émulsion suivant l'exemple 1. Le polyuréthane bloqué est additionné de 1 % de tensio-actif non ionique, par exemple un copolymère oxyde d'éthylène — oxyde de propylène (M = 3 800 $I_{OH}$ = 29) et 1 % de tensio-actif anionique du type lauryl-éther-sulfate de sodium.

La phase aqueuse comprenant 1 228 g d'eau distillée, 13,5 g de carboxyméthylcellulose, soit 1,1 % en poids, 12,3 g de tensio-actif non ionique, soit 1 % en poids et 12,3 g de tensio-actif anionique, soit 1 % en poids, est additionnée goutte à goutte à la phase huileuse où elle se disperse. La viscosité de l'émulsion s'accroît progressivement jusqu'à inversion de l'émulsion en type huile dans eau.

L'émulsion ainsi préparée a notamment pour caractéristiques : un pH de 6,2, un extrait sec de 41 % en poids et une viscosité mesurée par un viscosimètre BROOKFIELD R.V.T. de 780 centipoises à 100 t/mn.

Un papier obtenu par cuisson au sulfate est imprégné en size-press par l'émulsion précédente diluée à 7 %, puis séché dans une sécherie à 80-120 °C pendant 10 secondes environ, ce qui n'entraîne pas de déblocage, ce dernier étant réalisé en portant le papier à une température de peau de 350 °C pendant 3 secondes, par passage sous une rampe infra-rouge.

Les propriétés finales des papiers sont portées dans le tableau 7 (en annexe).

Celui-ci appelle les remarques suivantes :

— la résistance à la compression sur chant CCT s'accroît de 32 % pour un dépôt de polyuréthane de 2,3 % ;

— l'indice d'éclatement sec s'accroît de 17,4 % pour un même dépôt ;

— les propriétés de résistance à la rupture sont nettement améliorées.

Exemple 8

On prépare un prépolymère de polyuréthane par addition en deux étapes de 335 g (1 mole) de 4,4'-diphénylméthanediisocyanate sur 224 g de polypropylèneglycol (0,5 mole), (M = 448 g, $I_{OH}$ = 250).

Le mélange est porté 6 heures à 50 °C. Les fonctions isocyanates libres sont ensuite bloquées par addition de 195 g (1,5 mole) d'acétoacétate d'éthyle à 60 °C environ ; la réaction est catalysée par 0,1 % de phénate de sodium. Après 4 heures de mise en contact, on constate la disparition de la bande isocyanate en infra-rouge.

On réalise une émulsion à l'aide d'un mixer de laboratoire dans lequel on introduit le polyuréthane bloqué, préalablement additionné de 2 % de tensio-actif non ionique et 0,5 % de tensio-actif anionique du type lauryléthersulfate de sodium.

La phase aqueuse, préparée à partir de 1 085 g d'eau distillée, 11,9 g de carboxyméthylcellulose, soit 1,1 % en poids de la phase, 21,7 g de tensio-actif non ionique, soit 2 % de ladite phase et 5,42 g de lauryléthersulfate de sodium, soit 0,5 % en poids, est additionnée goutte à goutte à la phase huileuse où elle se disperse jusqu'à formation d'une émulsion huile dans eau stable.

L'émulsion ainsi préparée a notamment pour caractéristiques : un pH de 6, un extrait sec de 41 % en poids et une viscosité mesurée par un viscosimètre BROOKFIELD R.V.T. de 740 centipoises à 100 t/mn. (0,74 Pa.s).

Un papier obtenu par cuisson au sulfate est imprégné en size-press par l'émulsion précédente diluée à 7 %, séché dans une sécherie à 80-120 °C pendant 10 secondes environ et porté brutalement à une température de peau de 350 °C pendant 3 secondes sous une rampe infra-rouge où s'effectue le déblocage.

Les propriétés finales du papier sont indiquées dans le tableau 8 (en annexe).

On remarque l'amélioration des propriétés de résistance à la compression du papier (CCT) pour un faible dépôt de polyuréthane.

L'indice d'éclatement sec s'accroît de 21 %, la longueur de rupture est sensiblement améliorée.

Tableau 1

| Résultats | A témoin | B non débloqué | C débloqué 20mn à 140°C | D débloqué 2 x 3s à 300°C |
|---|---|---|---|---|
| Masse (g/m$^2$) | 126,2 | 129,5 | 128,4 | 128 |
| Epaisseur (mm) | 0,224 | 0,226 | 0,220 | 0,223 |
| Main=$\frac{\text{épaisseur en } \mu m}{\text{masse}}$ | 1,78 | 1,74 | 1,71 | 1,74 |
| Dépôt (1) | – | 1,96 | 1,05 | 1,64 |
| Longueur de rupture par traction | | | | |
| – marche | 4469 | 4376 | 5849 | 5798 |
| – travers | 1984 | 1839 | 2332 | 2471 |
| Allongement (%) | | | | |
| – marche | 1,28 | 1,37 | 1,64 | 1,58 |
| – travers | 2,20 | 2,58 | 2,55 | 2,75 |
| Indice d'éclatement sec | 1,79 | 1,71 | 2,34 | 2,57 |
| COBB (g/m$^2$) (2) – face 1 | 223 | 226 | 42 | 46 |
| – face 2 | 227 | 220 | 49 | 59 |
| CCT (N) | 155 | 160 | 220 | 220 |
| CMT (N) (60 mn) | 140 | 150 | 195 | 190 |

1. Ces valeurs correspondent au taux de polyuréthane, dans le papier après le traitement thermique.

2. Le COBB représente la quantité d'eau absorbée par le papier dont une des faces a été mise en contact avec l'eau pendant un temps déterminé, de 60 secondes ici.

Tableau 2

| ·Résultats | A<br>témoin | B<br>non<br>débloqué | C<br>débloqué<br>20 mn<br>à 130°C | D<br>débloqué<br>2 x 3 s<br>à 300°C | E<br>débloqué<br>4 s<br>à 300°C |
|---|---|---|---|---|---|
| Masse (g/m$^2$) | 150,2 | 155,1 | 156,6 | 153 | 153,3 |
| Epaisseur (mm) | 0,229 | 0,238 | 0,240 | 0,240 | 0,234 |
| Main | 1,52 | 1,53 | 1,53 | 1,56 | 1,52 |
| Dépôt de polyuréthane | - | 2,03 | 2,03 | 2,03 | 2,03 |
| Longueur de rupture (m) | | | | | |
| - marche | 8211 | 8376 | 9580 | 10034 | 9530 |
| - travers | 2907 | 2900 | 3333 | 3220 | 3340 |
| Allongement (%) | | | | | |
| - marche | 1,66 | 1,92 | 2,06 | 2 | 1,82 |
| - travers | 3,02 | 4,9 | 4,86 | 3,81 | 4,56 |
| Indice d'éclatement sec | 4,1 | 4,5 | 5 | 5,1 | 5 |
| COBB (g/m$^2$) | | | | | |
| - face 1 | 23 | 168 | 18 | 41 | 56 |
| - face 2 | 30 | 160 | 22 | 64 | 115 |
| Rigidité KODAK mN/mm | | | | | |
| - marche | 4,68 | 4,94 | 5,73 | 5,48 | 5,39 |
| - travers | 1,51 | 1,53 | 1,90 | 1,72 | 1,61 |
| CCT (N) | 267 | 247 | 315 | 30,6 | 296 |
| Double pli | | | | | |
| - marche | 1825 | 1668 | 1427 | 1018 | 1413 |
| - travers | 708 | 794 | 780 | 541 | 608 |

Tableau 3

| Résultats | A<br>témoin | A'<br>témoin<br>3 s<br>à 250°C | B<br>non<br>débloqué | C<br>débloqué<br>3 s<br>à 250°C | D<br>débloqué<br>2 x 3 s<br>à 250°C |
|---|---|---|---|---|---|
| Masse (g/m$^2$) | 122,3 | 120,5 | 126,4 | 123 | 124,1 |
| Epaisseur (mm) | 0,236 | 0,233 | 0,232 | 0,231 | 0,235 |
| Main | 1,93 | 1,94 | 1,83 | 1,88 | 1,90 |
| Longueur de rupture (m) | | | | | |
| - marche | 5018 | 4862 | 5094 | 6142 | 6713 |
| - travers | 2037 | 1864 | 1681 | 1962 | 2148 |
| Allongement (%) | | | | | |
| - marche | 1,58 | 1,55 | 1,50 | 1,47 | 1,66 |
| - travers | 1,60 | 1,80 | 2 | 2,52 | 2,22 |

8

Tableau 3 (suite)

| Résultats | A témoin | A' témoin 3 s à 250°C | B non débloqué | C débloqué 3 s à 250°C | D débloqué 2 x 3 s à 250°C |
|---|---|---|---|---|---|
| Indice d'éclatement sec | 2 | 2,1 | 2 | 2,4 | 2,6 |
| COBB (g/m$^2$) | | | | | |
| - face 1 | 178 | 68 | 198 | 63 | 30 |
| - face 2 | 118 | 76 | 199 | 95 | 35 |
| CCT (N) | 198 | 180 | 190 | 220 | 226 |
| CMT (N) (60 mn) | 200 | 215 | 209 | 235 | 246 |

Tableau 4

| Résultats | A témoin | B non débloqué | C débloqué 3 s à 280°C | D débloqué 2 x 3 s à 280°C |
|---|---|---|---|---|
| Masse (g/m$^2$) | 140,7 | 146,4 | 147,8 | 146,6 |
| Epaisseur (mm) | 0,245 | 0,250 | 0,260 | 0,250 |
| Main | 1,74 | 1,71 | 1,75 | 1,70 |
| Dépôt en polyuréthane | - | 2,6 | 1,9 | 2,25 |
| Longueur de rupture (m) | | | | |
| - marche | 4027 | 3517 | 4216 | 4213 |
| - travers | 1692 | 1547 | 1808 | 1823 |
| Allongement (%) | | | | |
| - marche | 1,43 | 1,46 | 1,65 | 1,66 |
| - travers | 1,66 | 2,13 | 2,33 | 2,50 |
| Indice d'éclatement sec | 1,5 | 1,55 | 1,74 | 1,85 |
| COBB (g/m$^2$) | | | | |
| - face 1 | 60 | 86 | 20 | 15 |
| - face 2 | 125 | 155 | 59 | 31 |
| CCT (N) | 155 | 156 | 182 | 192 |
| RCT (N) (RING-CRUSH) (résistance à la compression sur chant) | | | | |
| - marche | 160 | 176 | 191 | 196 |
| - travers | 128 | 133 | 148 | 145 |

Tableau 5

| Résultats | A<br>témoin | B<br>non<br>débloqué | C<br>débloqué<br>3 s<br>à 280°C | D<br>débloqué<br>2 x 3 s<br>à 280°C |
|---|---|---|---|---|
| Masse (g/m$^2$) | 131,6 | 143,8 | 141,3 | 142,2 |
| Epaisseur (mm) | 0,238 | 0,252 | 0,254 | 0,251 |
| Main | 1,80 | 1,75 | 1,79 | 1,76 |
| Dépôt en polyuréthane | - | 5,3 | 3,07 | 3,78 |
| CCT (N) | 146 | 188 | 207 | 236 |
| RCT (N) (RING-CRUSH) | | | | |
| – marche | 150 | 180 | 180 | 190 |
| – travers | 120 | 130 | 145 | 155 |
| Rigidité TABER (g.cm$^{-1}$) | | | | |
| – marche | 13,5 | 14,8 | 13,7 | 14,4 |
| – travers | 4,5 | 3,9 | 4,4 | 4,7 |
| Charge de rupture | | | | |
| – marche | 7,96 | 8,26 | 10,1 | 11 |
| – travers | 3,38 | 3,08 | 4,46 | 4,76 |
| Indice d'éclatement sec | 1,4 | 1,6 | 2,13 | 2,33 |
| Double pli | | | | |
| – marche | 330 | 428 | 299 | 378 |
| – travers | 92 | 73 | 235 | 436 |
| COBB (g/m$^2$) | | | | |
| – face 1 | 167 | 89 | 92 | 97 |
| – face 2 | 154 | 49 | 28 | 30 |

Tableau 6

| Résultats | A<br>témoin | Imprégnation par émulsion à 10 % | | |
|---|---|---|---|---|
| | | B<br>non<br>débloqué | C<br>débloqué<br>0,5 s<br>à 300°C | D<br>débloqué<br>2 x 0,5 s<br>à 300°C |
| Poids (g/m$^2$) | 106,5 | 115,8 | 115,8 | 113,8 |
| Epaisseur (mm) | 0,197 | 0,202 | 0,204 | 0,204 |
| Main | 1,85 | 1,74 | 1,76 | 1,79 |
| Longueur de rupture (m) | | | | |
| – marche | 4364 | 4697 | 6397 | 6444 |
| – travers | 2247 | 1946 | 2550 | 3005 |
| Allongement (%) | | | | |
| – marche | 1,30 | 1,22 | 1,69 | 2 |

Tableau 6 (suite)

| Résultats | A<br><br>témoin | Imprégnation par émulsion à 10 % | | |
|---|---|---|---|---|
| | | B<br><br>non<br>débloqué | C<br>débloqué<br>0,5 s<br>à 300°C | D<br>débloqué<br>2x0,5 s<br>à 300°C |
| – travers | 2,62 | 2,80 | 3,14 | 3,70 |
| Indice d'éclatement sec | 2,06 | 2,08 | 2,78 | 2,72 |
| Rigidité TABER (g·cm$^{-1}$) | | | | |
| – marche | 4,90 | 6,43 | 6,85 | 9,33 |
| – travers | 2,55 | 2,73 | 3,38 | 3,58 |
| Double pli (tension 2 kg) | | | | |
| – marche | 115 | 125 | 175 | 212 |
| – travers | 38 | 42 | 47 | 59 |
| COBB (g) | | | | |
| – face 1 | 160 | 170 | 145 | 139 |
| – face 2 | 168 | 157 | 150 | 151 |
| CCT (N) | 130 | 135 | 170 | 160 |
| CMT (N) (60 mm) | 125 | 150 | 175 | 170 |
| RCT (N) (RING-CRUSH) | | | | |
| – marche | 110 | 145 | 165 | 160 |
| – travers | 87 | 90 | 120 | 110 |
| Dépôt en polyuréthane | – | 3,18 | 2,63 | 2,49 |

Tableau 7

| Résultats | A<br><br>témoin | B<br>non<br>débloqué | C<br>débloqué<br>20 mn<br>à 130°C | D<br>débloqué<br>3 s<br>à 350 °C |
|---|---|---|---|---|
| Masse (g/m$^2$) | 155,3 | 159,3 | 156,8 | 156,5 |
| Epaisseur (mm) | 0,250 | 0,250 | 0,254 | 0,252 |
| Main | 1,61 | 1,57 | 1,62 | 1,61 |
| Dépôt en polyuréthane (%) | – | 2,3 | 2,3 | 2,3 |
| Longueur de rupture (m) | | | | |
| – marche | 10242 | 10289 | 11335 | 11270 |
| – travers | 3003 | 3000 | 3533 | 3221 |
| Allongement (%) | | | | |
| – marche | 1,83 | 2,33 | 2,46 | 2,37 |
| – travers | 4,04 | 5,69 | 5,2 | 5,7 |
| Indice d'éclatement sec | 46 | 48 | 54 | 54 |
| COBB (g/m$^2$) | | | | |
| – face 1 | 39,5 | 209 | 26 | 42 |
| – face 2 | 103 | 220 | 32 | 73 |
| CCT (N) | 241 | 309 | 328 | 318 |

## 0 017 598

Tableau 8

| Résultats | A témoin | B non débloqué | C débloqué 20 mn à 130°C | D débloqué 3 s à 350°C |
|---|---|---|---|---|
| Masse (g/m$^2$) | 155,3 | 159,8 | 156,3 | 158,7 |
| Epaisseur (mm) | 0,250 | 0,245 | 0,248 | 0,240 |
| Main | 1,61 | 1,53 | 1,59 | 1,51 |
| Dépôt en polyuréthane (%) | – | 1,71 | 1,71 | 1,71 |
| Longueur de rupture (m) | | | | |
| – marche | 10242 | 10972 | 11100 | 11594 |
| – travers | 3003 | 3338 | 3413 | 3571 |
| Allongement (%) | | | | |
| – marche | 1,83 | 2,35 | 2,26 | 2,27 |
| – travers | 4,04 | 5,19 | 5,3 | 5,4 |
| CCT (N) | 241 | 303 | 324 | 341 |
| Indice d'éclatement sec | 43 | 50 | 52 | 52 |

**Revendications**

1. Procédé de traitement de papiers ou cartons à base de fibres cellulosiques, comprenant les opérations suivantes :

— on imprègne les papiers ou cartons par des émulsions aqueuses contenant au moins un prépolymère de polyuréthane bloqué, au moins un catalyseur spécifique de déblocage,

— on leur fait sublr un traitement thermique qui a pour effet de débloquer le prépolymère, caractérisé en ce que le traitement thermique s'effectue en portant les papiers ou cartons à une température de peau comprise entre 200 °C et 350 °C pendant 0,5 seconde à 6 secondes.

2. Procédé selon la revendication 1, caractérisé en ce que le traitement thermique s'effectue en plusieurs étapes.

3. Procédé selon une des revendications 1 à 2, caractérisé en ce que le traitement thermique s'effectue par passage du papier ou carton face à au moins une rampe infra-rouge.

4. Procédé selon une des revendications 1 à 2, caractérisé en ce que le traitement thermique s'effectue par passage du papier ou carton dans une enceinte calorifugée.

5. Procédé selon une des revendications 1 à 4, caractérisé en ce que le catalyseur spécifique de déblocage est choisi parmi le groupe des sels d'amines tertiaires, des sels organométalliques et des complexes métalliques.

6. Procédé selon une des revendications 1 à 5, caractérisé en ce que le catalyseur spécifique de déblocage est utilisé à raison de 0,1 % à 5 % et de préférence de 1 à 3 % du poids total du polyuréthane bloqué.

7. Papier ou carton fibreux à base de fibres cellulosiques obtenu par la mise en œuvre du procédé selon une des revendications 1 à 6.

8. Papier ou carton selon la revendication 7, caractérisé en ce qu'il présente de 0,5 % à 10 % en poids de polyuréthane par rapport à son poids total et de préférence de 0,5 % à 2,5 % en poids de polyuréthane.

**Claims**

1. A method of treating papers or cardboards based on cellulosic fibres, comprising the following steps :

— the papers or cardboards are impregnated with aqueous emulsions containing at least one blocked polyurethane prepolymer, and at least one specific catalyst for unblocking, and

— they are subjected to a heat treatment which has the effect of unblocking the prepolymer,

12

characterised in that the heat treatment is carried out by bringing the papers or cardboards to a surface temperature from 200 °C to 350 °C for a period from 0.5 to 6 seconds.

2. A method according to claim 1, characterised in that the heat treatment is carried out in a plurality of stages.

3. A method according to one of claims 1 and 2, characterised in that the heat treatment is carried out by passing the paper or cardboard before at least one infra-red lamp.

4. A method according to one of claims 1 and 2, characterised in that the heat treatment is carried out by passing the paper or cardboard through a heat-insulated enclosure.

5. A method according to one of claims 1 to 4, characterised in that the specific catalyst for unblocking is selected from the group comprising salts of tertiary amines, organometal salts and metal complexes.

6. A method according to one of claims 1 to 5, characterised in that the specific catalyst for unblocking is used in an amount of 0.1 % to 5 % and preferably 1 to 3 % of the total weight of blocked polyurethane.

7. Fibrous paper or cardboard based on cellulosic fibres obtained by use of a method according to one of claims 1 to 6.

8. Paper or cardboard according to claim 7, characterised in that it has from 0.5 % to 10 % by weight of polyurethane based on its total weight, preferably from 0.5 % to 2.5 % by weight of polyurethane.

**Ansprüche**

1. Verfahren zur Behandlung von Papier oder Karton aus Fasern auf Cellulosebasis mit folgenden Verarbeitungsschritten :
— Imprägnieren des Papiers oder Kartons mit einer wässrigen, wenigstens ein Vorpolymerisat eines geschützten Polyurethans und wenigstens einen spezifischen Freigabekatalysator enthaltenden Emulsion,
— Unterwerfen der oben genannten Substanzen einer Wärmebehandlung, um das Vorpolymer freizugeben, dadurch gekennzeichnet, daß die Wärmebehandlung ausgeführt wird, indem das Papier oder der Karton bei einer Hauttemperatur zwischen 200 und 350 °C für die Dauer von 0,5 bis 6 sec. gehalten wird.

2. Verfahren nach Anspruch 1, dadurch gekennzeichnet, daß die Wärmebehandlung in mehreren Schritten ausgeführt wird.

3. Verfahren nach einem der Ansprüche 1 und 2, dadurch gekennzeichnet, daß die Wärmebehandlung durch Vorbeiführen des Papiers oder Kartons an wenigstens einer Infrarotleuchte ausgeführt wird.

4. Verfahren nach einem der Ansprüche 1 und 2, dadurch gekennzeichnet, daß die Wärmebehandlung durch Hindurchführen des Papiers oder Kartons durch einen wärmeisolierten Raum ausgeführt wird.

5. Verfahren nach einem der Ansprüche 1 bis 4, dadurch gekennzeichnet, daß der spezifische Freigabekatalysator aus der Gruppe der tertiären Amminsalze, metallorganischen Salze und Metallkomplexverbindungen gewählt ist.

6. Verfahren nach einem der Ansprüche 1 bis 5, dadurch gekennzeichnet, daß der Anteil an spezifischem Freigabekatalysator 0,5 bis 5 %, vorzugsweise 1 bis 3 % bezogen auf das Gewicht des geschützten Polyurethans beträgt.

7. Papier oder Karton aus Fasern auf Cellulosebasis, erhalten durch Anwendung des Verfahrens nach einem der Ansprüche 1 bis 6.

8. Papier oder Karton nach Anspruch 7, dadurch gekennzeichnet, daß es 0,5 bis 10 Gew.-%, vorzugsweise 0,5 bis 2,5 Gew.-% Polyurethan, bezogen auf sein Gesamtgewicht enthält.